# EUROPEAN PATENT SPECIFICATION

(11) **EP 2 954 544 B1**
(45) Date of publication and mention of the grant of the patent: **31.01.2018**
(21) Application number: 14749628.5
(22) Date of filing: 06.02.2014
(51) Int. Cl.: H01F 27/28, H01F 30/14, H01F 30/16, H02M 5/14

(54) **TRANSMISSION OF ELECTRIC POWER**
ÜBERTRAGUNG VON ELEKTRISCHER ENERGIE
TRANSMISSION DE PUISSANCE ÉLECTRIQUE

(30) Priority: 08.02.2013 US 201313762570
(43) Date of publication of application: 16.12.2015
(73) Proprietor: Stauffer, John E., Greenwich Connecticut 06831 (US)
(72) Inventor: Stauffer, John E., Greenwich Connecticut 06831 (US)
(74) Representative: Stöckeler, Ferdinand
(86) International application number: PCT/US2014/015022
(87) International publication number: WO 2014/124090

(56) References cited:
- WO-A1-93/13588
- CN-A- 102 592 810
- JP-A- H05 170 408
- US-A- 2 907 945
- US-A- 3 898 569
- US-A- 5 581 224
- US-A- 5 731 666
- US-A- 5 926 083
- US-A- 6 166 531
- US-B2- 7 443 271
- US-B2- 7 474 193

## Description

### BACKGROUND

The transmission of electric power is achieved almost universally by means of 60 cycle per second, three-phase, alternating current. Over long distances, voltages as high as 345 kilovolts and in a few locations 765 kilovolts are used. The only exceptions are a few connectors that employ direct current.

Early in the development of the transmission of electrical power using a power grid, alternating current was selected over direct current because of its advantages. Alternating electricity can easily be stepped up by transformers from low voltage to the high tension required for long distance transmission. At the other end of the line, the voltage can be reduced to a safe level for distribution to consumers. In addition, alternating current is easy to regulate.

In spite of the pluses for alternating current, it has several drawbacks. By generating electromagnetic radiation, AC dissipates considerable power over long distances and also in underwater transmission. The grid, as a whole, stores vast amounts of energy in the magnetic fields that surround the wires that carry the alternating current. The resulting electrical inertia makes it difficult to control power upsets. Finally, AC power presents a challenge because various sources of electricity must be synchronized.

Because of these deficiencies of in AC, direct current is being used in special situations to transmit electric power. Examples of this practice include the wheeling of hydroelectric power from Canada to New York State, transmission of electricity under Long Island Sound, and the limited exchange of power between the three independent systems in the United States. However, the investment costs associated with these applications of direct current are huge. Massive electronic installations are needed to convert AC to DC and back again.

The future expansion of the power grid will depend in large measure on the availability of new technology to meet ever more demanding needs. The ideal solution is to combine the advantages of AC power with the attributes of DC electricity to arrive at solutions that are versatile, economical, and user friendly. These and other objects and benefits of the Power Transmission Systems described herein will become apparent from the following description and the figures that accompany the disclosure.

US 6 166 531 A, JP HO5 170408 A, and WO 93/13588 A1 disclose transformers connected to a cable, the transformers converting a three phase alternating current to single-phase current.

### SUMMARY OF THE DISCLOSURE

A feature of an embodiment of a Power Transmission System is the use of a coaxial cable to transmit single-phase alternating current. One electric pole is connected to the central conducting wire of the coaxial cable, and the other pole is attached to the conducting shield that surrounds but is insulated from the wire.

Because power supplies are almost entirely three-phase alternating current, provision is made to convert three-phase power to single-phase and back again. This conversion entails the use of specially designed transformers.

The transformers used with the Power Transmission System are toroidal in shape and include a chord that intersects the axis of the torus. The primary winding is a coil of wire around the torus with the ends connected to each other. Leads from the three phases of the power supply are attached to the primary coil at points 120° apart from each other.

The secondary winding of the transformer is a coil of wire wound about the chord. Both torus and chord are solid cores fabricated from magnetic material such as iron.

In one embodiment, an apparatus for the transmission of electrical power includes a cable and a transformer connected to the cable, the transformer for converting a three-phase alternating current to single-phase current. In one configuration, the cable is a coaxial cable. Optionally, the transformer has a core in the configuration of a torus with a chord passing through an interior of the torus, a primary winding coiled about the torus, and a secondary winding coiled about the chord. In another configuration, the chord is a diameter of the torus. Alternatively, the primary leads are attached to the primary winding at points equidistant on the circumference of the torus with one lead directly opposite one end of the chord. In another alternative, the primary leads are attached to the primary winding at points equidistant on the circumference of the torus with leads rotated from the direction of the chord.

In one embodiment, a power conversion apparatus includes a core in the configuration of a torus with a chord passing through an interior of the torus, a primary winding coiled about the torus, and a secondary winding coiled about the chord, wherein the power conversion apparatus converts three-phase alternating current to single-phase current. Optionally, the chord is a diameter of the torus. Alternatively, the primary leads are attached to the primary winding at points equidistant on the circumference of the torus with one lead directly opposite one end of the chord. In another alternative, the primary leads are attached to the primary winding at points equidistant on the circumference of the torus with leads rotated from the direction of the chord.

In one embodiment, a method for converting and transmitting power includes receiving at a transformer a three-phase alternating current. The method further includes converting the three-phase alternating current to a single-phase alternating current. The method additionally includes transmitting the single-phase alternating current using a cable. Optionally, the transformer includes a core in the configuration of a torus with a chord passing through an interior of the torus, a primary winding coiled about the torus, and a secondary winding coiled about the chord. Alternatively, the chord is a diameter of the torus. Optionally, the primary leads are attached to the primary winding at points equidistant on the circumference of the torus with one lead directly opposite one end of the chord. In one configuration, the primary leads are attached to the primary winding at points equidistant on the circumference of the torus with leads rotated from the direction of the chord. Optionally, the cable is a coaxial cable. In one alternative, the method further includes receiving the single-phase alternating current at a second transformer; converting the single-phase alternating current to a second three-phase alternating current; and transmitting the second three-phase alternating current using a second cable.

In another embodiment, a system for the transmission of electrical power includes a first cable carrying a first three-phase alternating current. The system further includes a transformer connected to the first cable, the transformer converting the first three-phase alternating current to a single-phase current. The system further includes a coaxial cable, the coaxial cable transmitting the single phase current. Optionally, the transformer has a core in the configuration of a torus with a chord passing through an interior of the torus, a primary winding coiled about the torus, and a secondary winding coiled about the chord. In one alternative, the system includes a second transformer, connected to the coaxial cable, the second transformer converting the single-phase alternating current to a second three-phase current and a second cable carrying the second three-phase current.

### BRIEF DESCRIPTION OF THE DRAWINGS

Fig. 1 shows one embodiment of a transformer for use with a Power Transmission System showing primary and secondary windings;
Fig. 2 shows another embodiment of a transformer for use with a Power Transmission System in which the primary leads are rotated clockwise;
Fig. 3 shows an Electromagnetic Force (EMF) in three phases of the power supply;
Fig. 4 shows the EMF in the two leads from the secondary winding of the transformer of Fig. 1.
Fig. 5 shows the EMF in the two leads from the secondary winding of the transformer of Fig. 2.

### DETAILED DESCRIPTION

Embodiments of a Power Transmission System employ a coaxial cable for the transmission of electrical power. By this means, the efficiency of the operation is enhanced, particularly in those special applications where direct current is now used. The outstanding feature of embodiments of the Power Transmission System is that it is compatible with the existing power grid.

In one embodiment of a Power Transmission System, 60 cycles per second, single-phase, alternating current is transmitted by the coaxial cable. One pole of the power supply leads to the central wire of the cable, and the other pole is attached to the conductive tube encasing the central wire.

The electric current which travels in the central wire at all times is equal to but moving in the opposite direction from the current flowing in the outer shell. Thus, the electromagnetic field generated by one current cancels the field generated by the other current. The net result is that the cable has zero electromagnetic field strength, and losses due to radiation are eliminated.

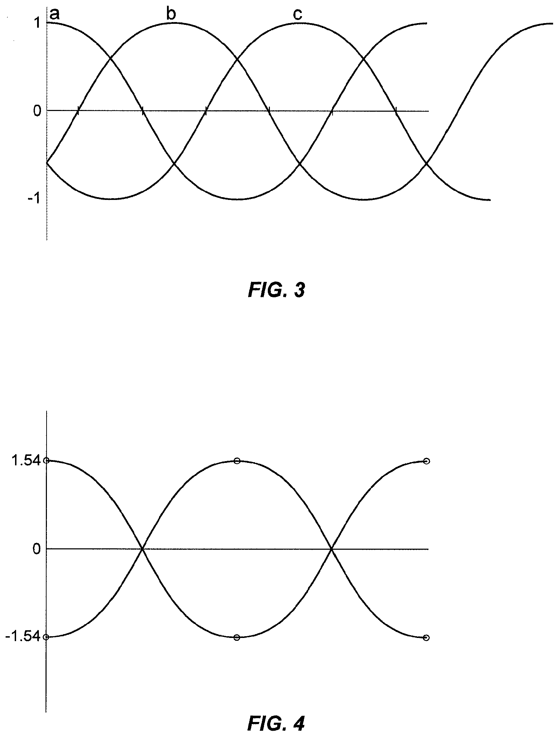

The phenomenon can better be visualized by referring to Figure 4. The sinusoidal curve representing the voltage in lead 1 is completely balanced by a similar curve for lead 2. Sometimes this arrangement is referred to as a two-phase system comprising two equal voltages oppositely directed. The more correct terminology, however, is single-phase.

Since the power grid is universally three-phase, provision must be made to convert this electricity to single-phase in order to transmit it by a coaxial cable. Conceptually this conversion is shown in the figures and description herein. Three-phase power can be used in a motor to drive a single-phase generator. The cost and added complexity of this scheme, however are a disadvantage.

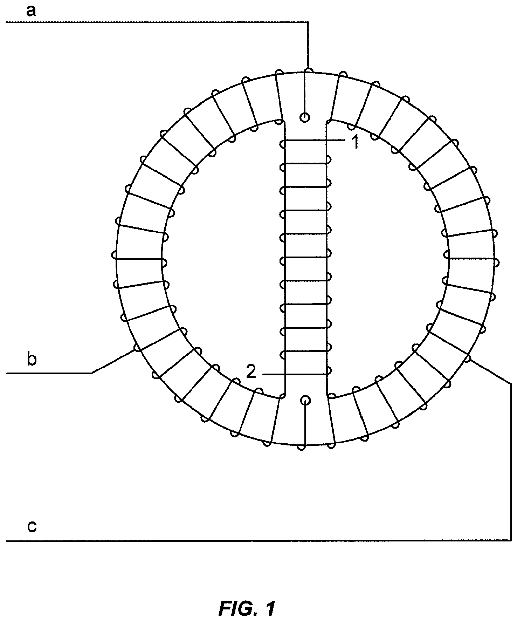

Embodiments of conversion mechanisms for a Power Transmission System envisions the use of a transformer of unique design to convert three-phase power to single-phase electricity. Such a transformer is illustrated in Figure 1. The transformer is in the shape of a torus with a vertical chord passing through the axis. Both torus and chord are made from magnetic material such as iron.

The primary winding of the transformer is coiled about the torus with both ends attached to each other. The power leads to the primary winding, shown as a, b and c, are attached at equidistant points on the torus or 120° apart on the circle. One lead, a, is located at the top of the torus, just above one end of the chord.

The secondary winding is coiled about the chord. The two ends of this winding are attached to the take-off leads 1 and 2.

The electric power profiles are shown in Figure 3 and 4. The three-phase power supply is shown as three sinusoidal curves a, b and c in Figure 3. The output voltage 1 and 2 are shown as two sinusoidal curves in Figure 4. The frequency of the output is the same as the input, and there is no phase shift.

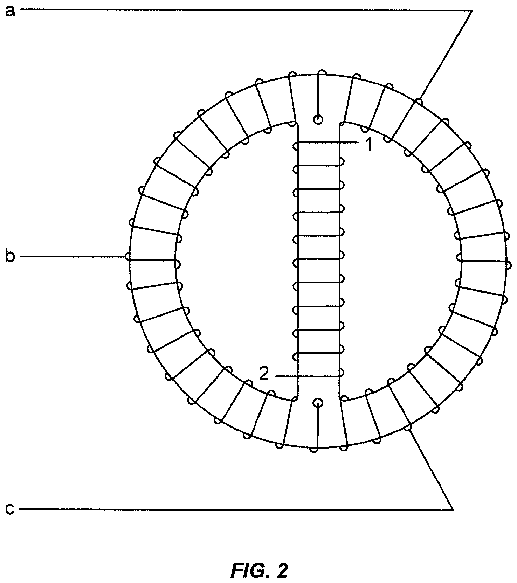

Another transformer arrangement is shown in Figure 2. The transformer cores and windings are identical to the features shown in Figure 1, but the leads are located at different points. In this particular case, lead a is shifted 30° from the vertical. The other leads band are likewise rotated 30°.

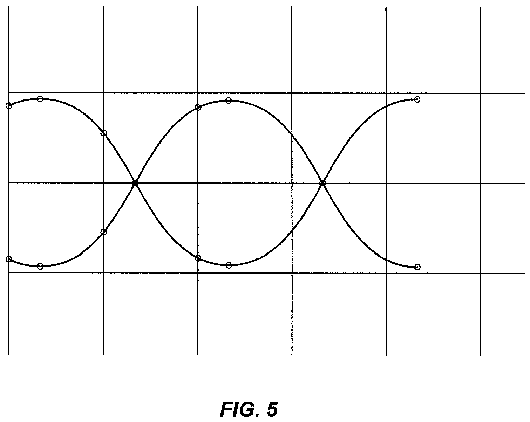

The effect of the changes in lead location is quite interesting. The voltage outputs for the transformer are shown in Figure 5. Noticeably there is a phase shift in the secondary voltage. While this shift will have no effect on the power transmission in the coaxial cable, it can cause problems for reconnecting the cable to the grid.

At the other end of the coaxial cable, where it is reconnected to the grid, single-phase current must be converted back to three-phase current. This conversion is achieved using the same transformer but with reverse connections. The winding on the chord now becomes the primary.

Materials of construction are important. While standards for such materials are disclosed in prior art, the size of the equipment will place extra demands on the conductors and insulation. In cases where heavy loads are contemplated, a water jacket can be used to cover the coaxial cable.

Applications for the Power Transmission Systems, associated transformers, and methods of use are virtually unlimited. Whether used for transmitting power long distances, distributing electricity in urban areas or serving residential communities, a coaxial cable can provide superior performance under varying conditions.

### Examples

In order to determine the voltage profile of the secondary current, a series of calculations was made. As an example of these calculations, the values for voltage in the primary winding of the transformer of Figure 1 was taken at time t when phase a was in the 60° position. From Figure 3, the voltage at contact point a equals + 0.54 volts, at b + 0.54 volts and at c - 1.0 volts. Again looking at Figure 1, the magnetic flux was determined for the left side of the torus as follows. The current in the winding between a and b was zero. The current between b and c was proportional to + 0.54 - (-1.0) or 1.54 and in a clockwise direction. The magnetic flux in the segment of the torus from b to its lowest point was 0.5 n (1.54) or 0.77 n where n is the number of windings between each primary contact. Thus, the total flux in the left side of the torus was 0.77 n.

Using the same reasoning, the magnetic flux in the right side of the torus was determined to be 0.77 n. Because the current on the left side of the torus rotates in the same direction as the current on the right side, both the magnetic fields on the left side of the torus and the right side are pointing in the same direction, that is, the north poles are both up. As a result, the magnetic fluxes are additive and together equal the flux in the vertical cord, namely, 1.54 n.

If the number of turns of the secondary winding is equal to n, the voltage across the terminals 1 and 2 is equal to 1.54. Thus, the potential of terminal 1 is + 0.77 volts and at terminal 2, -0.77 volts. Table 1 gives the results for the calculation made for the transformer shown in Figure 1. Likewise Table 2 produces values for the transformer of Figure 2. The results for both transformers are shown graphically in Figures 4 and 5.

The previous detailed description is of a small number of embodiments for implementing the systems and methods for creating Power Transmission Systems and is not intended to be limiting in scope. The following claims set forth a number of the embodiments of the systems and methods for creating Power Transmission Systems and the systems of Power Transmission Systems disclosed with greater particularity.

**Table I**

| Voltages of the Primary and Secondary | | | | | | | | |
|---|---|---|---|---|---|---|---|---|
| Windings of the Transformer in Figure 1 | | | | | | | | |
| a | +1 | -1 | 0 | 0 | +0.54 | -0.54 | -0.54 | +0.86 |
| b | -0.54 | +0.54 | +0.86 | -0.86 | +0.54 | +1 | -0.54 | 0 |
| c | -0.54 | +0.54 | -0.86 | +0.86 | -1 | -0.54 | +1 | -0.86 |
| 1 | +1.54 | -1.54 | 0 | 0 | +0.77 | -0.77 | -0.77 | +1.29 |
| 2 | -1.54 | +1.54 | 0 | 0 | -0.77 | +0.77 | +0.77 | -1.29 |

**Table 2**

| Voltages of the Primary and Secondary | | | | | | | |
|---|---|---|---|---|---|---|---|
| Windings of the Transformer in Figure 2 | | | | | | | |
| a | 0 | -0.54 | +0.86 | +1 | -1 | -0.86 | +0.54 |
| b | +0.86 | +1 | 0 | -0.54 | +0.54 | 0 | -1 |
| c | -0.86 | -0.54 | -0.86 | -0.54 | +0.54 | +0.86 | +0.54 |
| 1 | +0.64 | 0 | +1.29 | +1.15 | -1.15 | -1.29 | 0 |
| 2 | -0.64 | 0 | -1.29 | -1.15 | +1.15 | +1.29 | 0 |

## Claims

1. An apparatus for the transmission of electrical power comprising:
a cable,
a transformer connected to the cable, the transformer for converting a three-phase alternating current to single-phase current,
**characterized in that** the transformer has a core in the configuration of a torus with a chord passing through an interior of the torus, a primary winding coiled about the torus, and a secondary winding coiled about the chord and connected to the cable.

2. The apparatus of claim 1, wherein the cable is a coaxial cable.

3. The apparatus of claim 1, wherein the chord is a diameter of the torus.

4. The apparatus of claim 1,wherein the primary leads are attached to the primary winding at points equidistant on the circumference of the torus with one lead directly opposite one end of the chord.

5. The apparatus of claim 1, wherein the primary leads are attached to the primary winding at points equidistant on the circumference of the torus with leads rotated from the direction of the chord.

6. A method for converting and transmitting power, comprising:
receiving at a transformer a three-phase alternating current;
converting the three-phase alternating current to a single-phase alternating current;
transmitting the single-phase alternating current using a cable,
**characterized in that** the transformer includes a core in the configuration of a torus with a chord passing through an interior of the torus, a primary winding coiled about the torus, and a secondary winding coiled about the chord.

7. The method of claim 6 wherein the chord is a diameter of the torus.

8. The method of claim 6 wherein the primary leads are attached to the primary winding at points equidistant on the circumference of the torus with one lead directly opposite one end of the chord.

9. The method of claim 6 wherein the primary leads are attached to the primary winding at points equidistant on the circumference of the torus with leads rotated from the direction of the chord.

10. The method of claim 6 wherein the cable is a coaxial cable.

11. The method of claim 6, further comprising:
receiving the single-phase alternating current at a second transformer;
converting the single-phase alternating current to a second three-phase alternating current;
transmitting the second three-phase alternating current using a second cable.

## Patentansprüche

1. Eine Vorrichtung für die Übertragung elektrischer Leistung, die folgende Merkmale aufweist:
ein Kabel,
einen Transformator, der mit dem Kabel verbunden ist, wobei der Transformator zum Umwandeln eines Dreiphasenwechselstroms in einen Einphasenstrom dient,
**dadurch gekennzeichnet, dass** der Transformator einen Kern in der Konfiguration eines Torus aufweist, mit einer Sehne, die durch ein Inneres des Torus verläuft, einer Primärwicklung, die um den Torus gewickelt ist, und einer Sekundärwicklung, die um die Sehne gewickelt ist und mit dem Kabel verbunden ist.

2. Die Vorrichtung gemäß Anspruch 1, bei der das Kabel ein Koaxialkabel ist.

3. Die Vorrichtung gemäß Anspruch 1, bei der die Sehne ein Durchmesser des Torus ist.

4. Die Vorrichtung gemäß Anspruch 1, bei die Primäranschlussleitungen an der Primärwicklung an Punkten angebracht sind, die auf dem Umfang des Torus gleichmäßig beabstandet sind, wobei eine Anschlussleitung direkt gegenüber einem Ende der Sehne liegt.

5. Die Vorrichtung gemäß Anspruch 1, bei der die Primäranschlussleitungen an der Primärwicklung an Punkten angebracht sind, die auf dem Umfang des Torus gleichmäßig beabstandet sind, wobei Anschlussleitungen von der Richtung der Sehne gedreht sind.

6. Ein Verfahren zum Umwandeln und Übertragen von Leistung, das folgende Schritte aufweist:
Empfangen eines Dreiphasenwechselstroms an einem Transformator;
Umwandeln des Dreiphasenwechselstroms in einen Einphasenwechselstrom;
Übertragen des Einphasenwechselstroms unter Verwendung eines Kabels,
**dadurch gekennzeichnet, dass** der Transformator einen Kern in der Konfiguration eines Torus umfasst, mit einer Sehne, die durch ein Inneres des Torus verläuft, einer Primärwicklung, die um den Torus gewickelt ist, und einer Sekundärwicklung, die um die Sehne gewickelt ist.

7. Das Verfahren gemäß Anspruch 6, bei dem die Sehne ein Durchmesser des Torus ist.

8. Das Verfahren gemäß Anspruch 6, bei dem die Primäranschlussleitungen an der Primärwicklung an Punkten angebracht sind, die auf dem Umfang des Torus gleichmäßig beabstandet sind, wobei eine Anschlussleitung direkt gegenüber einem Ende der Sehne liegt.

9. Das Verfahren gemäß Anspruch 6, bei dem die Primäranschlussleitungen an der Primärwicklung an Punkten angebracht sind, die auf dem Umfang des Torus gleichmäßig beabstandet sind, wobei Anschlussleitungen von der Richtung der Sehne gedreht sind.

10. Das Verfahren gemäß Anspruch 6, bei dem das Kabel ein Koaxialkabel ist.

11. Das Verfahren gemäß Anspruch 6, das ferner folgende Schritte aufweist:
Empfangen des Einphasenwechselstroms an einem zweiten Transformator;
Umwandeln des Einphasenwechselstroms in einen zweiten Dreiphasenwechselstrom;
Übertragen des zweiten Dreiphasenwechselstroms unter Verwendung eines zweiten Kabels.

## Revendications

1. Appareil pour la transmission d'énergie électrique, comprenant:
un câble,
un transformateur connecté au câble, le transformateur étant destiné à convertir un courant alternatif triphasé en courant monophasé,
**caractérisé par le fait que** le transformateur présente un noyau présentant la configuration d'un toroïde avec une corde passant à travers l'intérieur du toroïde, un enroulement primaire bobiné autour du toroïde, et un enroulement secondaire bobiné autour de la corde et connecté au câble.

2. Appareil selon la revendication 1, dans lequel le câble est un câble coaxial.

3. Appareil selon la revendication 1, dans lequel la corde est un diamètre du toroïde.

4. Appareil selon la revendication 1, dans lequel les conducteurs primaires sont fixés à l'enroulement primaire en des points équidistants sur la circonférence du toroïde avec un conducteur directement opposé à une extrémité de la corde.

5. Appareil selon la revendication 1, dans lequel les conducteurs primaires sont fixés à l'enroulement primaire en des points équidistants sur la circonférence du toroïde avec des fils tournés par rapport à la direction de la corde.

6. Procédé de conversion et de transmission d'énergie, comprenant le fait de:
recevoir à un transformateur un courant alternatif triphasé;
convertir le courant alternatif triphasé en un courant alternatif monophasé;
transmettre le courant alternatif monophasé à l'aide d'un câble,
**caractérisé par le fait que** le transformateur comporte un noyau présentant la configuration d'un toroïde avec une corde passant à travers l'intérieur du toroïde, un enroulement primaire bobiné autour du toroïde, et un enroulement secondaire bobiné autour de la corde.

7. Procédé selon la revendication 6, dans lequel la corde est un diamètre du toroïde.

8. Procédé selon la revendication 6, dans lequel les conducteurs primaires sont fixés à l'enroulement primaire en des points équidistants sur la circonférence du toroïde avec un conducteur directement opposé à une extrémité de la corde.

9. Procédé selon la revendication 6, dans lequel les fils primaires sont fixés à l'enroulement primaire en des points équidistants sur la circonférence du toroïde avec des fils tournés par rapport à la direction de la corde.

10. Procédé selon la revendication 6, dans lequel le câble est un câble coaxial.

11. Procédé selon la revendication 6, comprenant par ailleurs le fait de:
recevoir le courant alternatif monophasé à un deuxième transformateur;
convertir le courant alternatif monophasé en un deuxième courant alternatif triphasé;
transmettre le deuxième courant alternatif triphasé à l'aide d'un deuxième câble.
